# EUROPEAN PATENT APPLICATION

(11) **EP 1 338 485 A2**
(43) Date of publication of application: **27.08.2003**
(21) Application number: 03250657.8
(22) Date of filing: 01.02.2003
(51) Int. Cl.: B60R 22/14

(54) **Shoulder pad for vehicle seat belt**

(30) Priority: 26.02.2002 GB 0204383
(71) Applicant: BRITAX RÖMER Kindersicherheit GmbH, D-89024 Ulm (DE)
(72) Inventor: Wetter, Hermann, 89075 Ulm (DE)
(74) Representative: Hollinghurst, Antony

(57) **Abstract**

A shoulder pad (24) is mounted on a shoulder strap of a seat belt so as to be positioned, in use, between the shoulder strap (20) and the shoulder of a user. The pad (24) has a friction-increasing surface (40) on a side thereof that faces towards the shoulder strap (20) and resilient projections (50) extending from said friction-increasing surface (40) to hold the friction-increasing surface (40) out of engagement with the shoulder strap in normal use but to allow the friction-increasing surface (40) to come into engagement with the shoulder strap when a force exceeding a predetermined value is applied thereto.

## Description

This invention relates to a shoulder pad for a vehicle seat belt, adapted to be mounted on a shoulder strap of the seat belt so as to be positioned, in use, between the shoulder strap and the shoulder of a user, the pad having a friction-increasing surface on a side thereof that faces towards the shoulder strap. This type of pad is particularly applicable to a child safety seat equipped with a harness including a pair of shoulder straps, for example as described in NL 1011428.

When a vehicle is subject to impact from the front in an accident, the upper torso of an occupant of a forward-facing seat tends to move forward relative to a seat belt shoulder strap. This forward movement is reduced by a friction-increasing surface on the side of the shoulder pad that faces towards the user's shoulder. However, in order to permit adjustment of the shoulder strap, it is necessary for the friction between the shoulder strap and the shoulder pad to be relatively low. Consequently, in NL 1011428, each shoulder pad is connected to the backrest of the child seat by an auxiliary strap that limits the extent to which friction between the child's torso and the shoulder pads can cause movement of the shoulder pads away from the backrest. This limiting effect only occurs after the corresponding auxiliary strap has been pulled tight. In practice, it is inevitable that there will be some slack in the auxiliary straps because the friction between the child's torso and the pads tends to limit tightening of the auxiliary straps as the harness is fitted. In addition, the auxiliary straps can slacken as a result of the child wriggling in the seat. In the event of an accident, the shoulder pads start to limit forward movement of the child's torso only when an such slack has been taken up.

It is an object of the invention to provide shoulder pads that are not subject to this disadvantage.

According to the invention, a shoulder pad of the type described above has resilient projections extending from said friction-increasing surface to hold the friction-increasing surface out of engagement with the shoulder strap in normal use but to allow the friction-increasing surface to come into engagement with the shoulder strap when a force exceeding a predetermined value is applied thereto.

Embodiments of the invention will now be described, by way of example, with reference to the accompanying drawings, in which:
Figure 1 is a transverse sectional view of a child safety seat having a harness equipped with a shoulder pad in accordance with a first embodiment of the invention;
Figure 2 is a schematic side view on an enlarged scale showing the interaction between the shoulder pad and the shoulder strap of the child seat harness;
Figure 3 is a perspective view of the shoulder pad shown in Figure 2;
Figure 4 is a perspective view on an enlarged scale of part of the shoulder pad shown in Figures 2 and 3, illustrating the resilient elements projecting from the friction-increasing surface;
Figure 5 is a side view of the part of the shoulder pad shown in Figure 4;
Figure 6 is a plan view of the part of the shoulder pad shown in Figures 4 and 5;
Figure 7 is a side view, similar to Figure 2, of a second embodiment of the invention; and
Figure 8 is a scrap side view of a third embodiment of the invention.

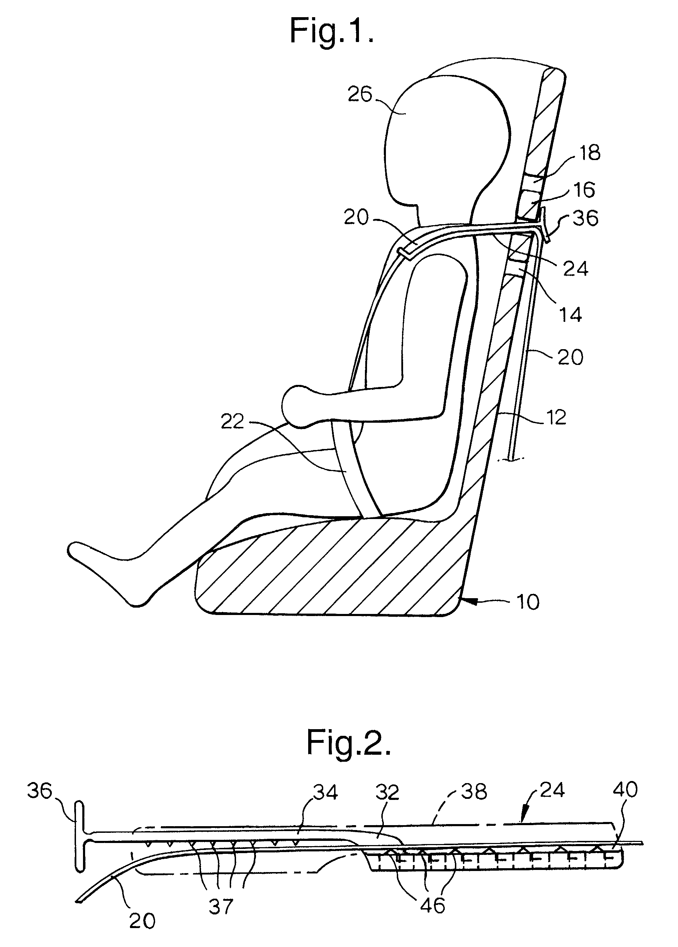

Figure 1 shows a child seat 10 having a seat back 12 with slots 14, 16 and 18 providing alternative locations at which a shoulder strap 20 of a harness may project through the seat back 12. The harness also incorporates a lap strap 22, together with corresponding shoulder and lap straps (not shown) on the other of the seat 10. Behind the seat back 12, the shoulder strap 20 extends downwardly to strap adjustment means (not shown), which may be as described in EP-A-0295838. A shoulder pad 24 is positioned between the shoulder strap 20 and the shoulder of an occupant 26 of the seat 10.

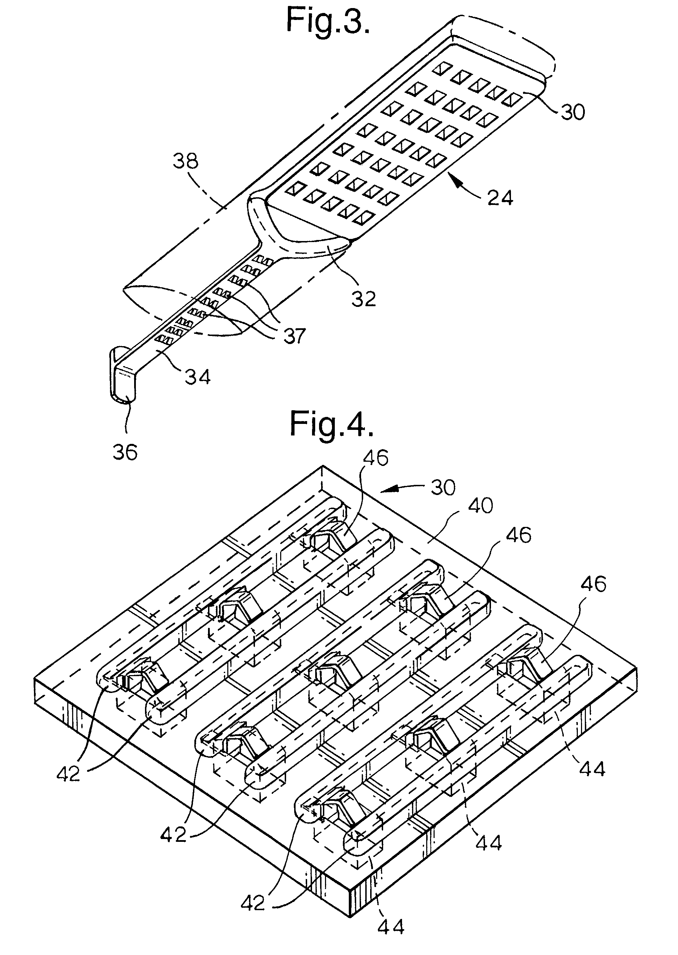

Referring to Figures 2 and 3, the shoulder pad 24 is moulded from synthetic rubber or a similar elastic material having a high coefficient of friction. The shoulder pad 24 has a body portion 30, a yoke 32 and an elastic tether strap 34. The body portion 30 is positioned below the shoulder strap 20 so as to abut against the shoulder of the child occupant 26. The yoke 32 projects from to the end of the body portion 30 nearer to the seat back 12 so as to extend round the shoulder strap 20. A tether strap 34 extends from the yoke 24, above the shoulder strap 20. A T-piece 36 on the free end of the yoke 24 can be inserted through the same slot 16 as the shoulder strap 20, in order to retain the body portion 24 at a desired distance from the seat back 12 in normal use. Dimples 37 on the surface of the tether strap 34 abut against the shoulder strap 20 to reduce friction in this region. A textile cover 38 (shown in dotted lines) encloses the tether strap 34 and also extends round the back of the body portion 30 so as to provide a tubular guide for preventing lateral displacement of the pad 24 relative to the shoulder belt 20.

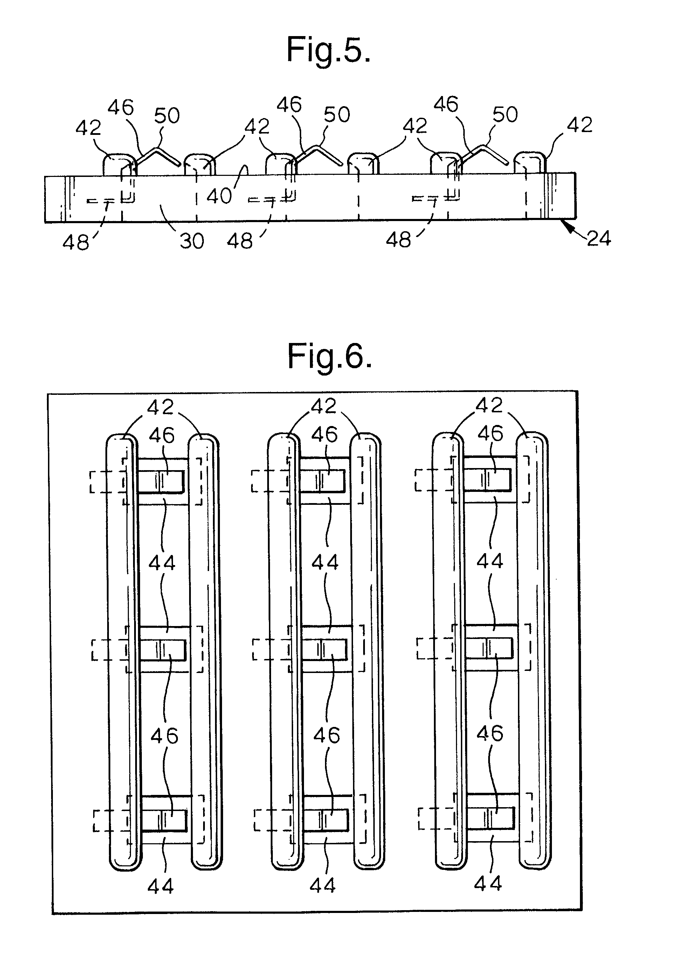

Referring to Figures 4 to 6, the surface 40 of the body portion 30 that abuts against the shoulder strap 20 includes a series of transverse ribs 42. In alternate spaces between the ribs 42, there are rows of slots 44 extending through the entire thickness of the body portion 30. A respective spring element 46 is located in each slot 44. Each spring element 46 has an anchorage portion 48 which is insert-moulded into the body 30 so as to project through the side wall of the corresponding slot 42. Each spring element 44 also has a V-shaped projection 50 that extends outwardly from the surface 40 to a greater distance than the adjacent ribs 42.

In normal use, the V-shaped projections 50 engage with the adjacent surface of the shoulder strap 20 so as to hold the ribs 42 out of contact therewith. The shoulder strap 20 can, therefore, slide relative to the shoulder pad 24 as the harness is tightened. In the event of an accident, the increased force exerted by the child's torso on the shoulder pad 24 deflects the resilient elements 46 so that the ribs 42 come into contact with the shoulder strap 20, thereby providing higher frictional resistance to movement of the shoulder pad 24 relative to the shoulder strap 20. Deformation of the yoke 32 and/or the elasticity of the tether strap 34 allows the shoulder pad 24 to move with the shoulder strap 20 as the latter stretches.

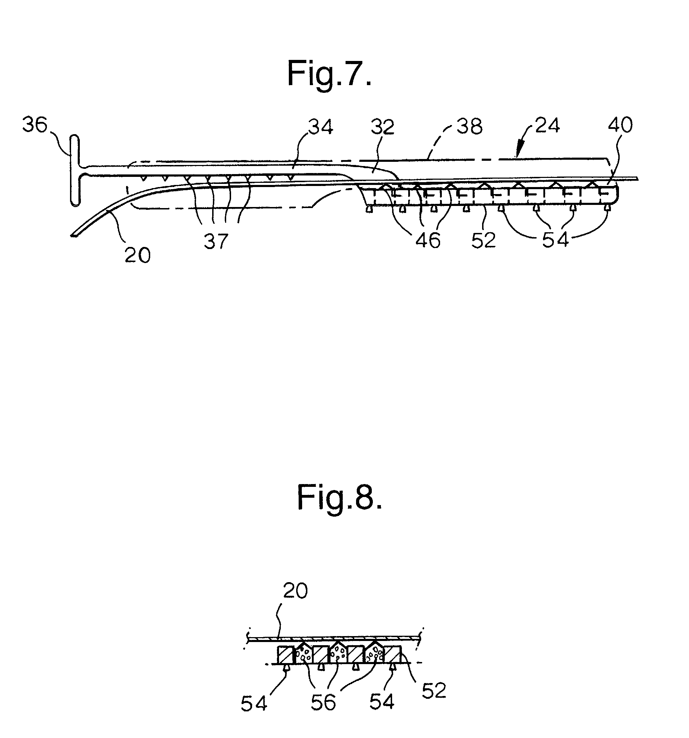

The surface 52 of the shoulder pad 24 that abuts against the child's body may be provided with thin projections 54, as shown in Figure 7. In the event of severe loading in an accident, the projections 54 are deformed elastically, thereby increasing the damping effect.

In both the embodiment shown in Figure 2 and in the embodiment shown in Figure 7, the spring elements 46 can be replaced by other resilient spacers having a low-friction surface. For example, they may comprise inserts 56 of synthetic foam material having a slippery surface, as shown in Figure 8.

## Claims

1. A shoulder pad for a vehicle seat belt, adapted to be mounted on a shoulder strap (20) of the seat belt so as to be positioned, in use, between the shoulder strap (20) and the shoulder of a user, the pad (24) having a friction-increasing surface (40) on a side thereof that faces towards the shoulder strap (20), **characterised by** resilient projections (50) extending from said friction-increasing surface (40) to hold the friction-increasing surface (40) out of engagement with the shoulder strap (20) in normal use but to allow the friction-increasing surface (40) to come into engagement with the shoulder strap (20) when a force exceeding a predetermined value is applied thereto.

2. A shoulder pad according to claim 1, wherein said friction-increasing surface (40) contains an array of openings (44) and each resilient projection comprises a spring element (46) projecting outwardly from a respective opening (44).

3. A shoulder pad according to claim 2, wherein each spring element (46) has one end (48) embedded in a side wall of the corresponding opening (44).

4. A shoulder pad according to claim 1, wherein the resilient projections comprise inserts (54) of synthetic foam material

5. A shoulder pad according to claim 4, wherein the inserts (54) have a slippery surface.

6. A shoulder pad according to any preceding claim, including a tether strap (34) having friction-reducing elements (37) adapted to abut against the shoulder strap (20) .
